# EUROPEAN PATENT APPLICATION

(11) **EP 3 439 069 A1**
(43) Date of publication of application: **06.02.2019**
(21) Application number: 16899498.6
(22) Date of filing: 29.11.2016
(51) Int. Cl.: H01M 2/12, H01G 11/74, H01G 11/78, H01M 2/06, H01M 2/10, H01M 2/20

(54) **FLEXIBLE SEALED POWER STORAGE CELL, POWER STORAGE MODULE AND POWER STORAGE PACK**

(30) Priority: 19.04.2016 JP 2016083474
(71) Applicant: Yamaha Hatsudoki Kabushiki Kaisha, Iwata-shi, Shizuoka 438-8501 (JP)
(72) Inventor: TAKAGI, Hidetaka, Iwata-shi Shizuoka 438-8501 (JP)
(74) Representative: Stöckeler, Ferdinand
(86) International application number: PCT/JP2016/085314
(87) International publication number: WO 2017/183227

(57) **Abstract**

The present teaching provides a flexible sealed accumulator cell capable of suppressing or reducing the occurrence of a failure which may otherwise be caused by overcharge or overdischarge, with a configuration that is easy to manufacture and assemble.

The present teaching relates to a flexible sealed accumulator cell including a flexible protective member having a flexibility and including a flexible inner portion having a flexibility and a flexible flared portion having a flexibility, the flexible inner portion being located between an external connector portion and a portion of a lead-out terminal joined to a closure part with respect to an extending-out direction of the lead-out terminal, the flexible inner portion covering first and second surfaces of the lead-out terminal in a width direction of the lead-out terminal, the flexible flared portion flaring from the flexible inner portion at least in a thickness direction of the lead-out terminal.

## Description

### Technical Field

The present teaching relates to a flexible sealed accumulator cell, an accumulator module, and an accumulator pack.

### Background Art

Examples of a flexible sealed accumulator cell include laminate type battery cells and laminate type capacitor cells. In the flexible sealed accumulator cell, overcharge or overdischarge may occur depending on its usage conditions. Occurrence of overcharge or overdischarge may raise an internal pressure of the flexible sealed accumulator cell, which may cause contents of the flexible sealed accumulator cell to erupt. Eruption of the contents of the flexible sealed accumulator cell may lead to failures not only of the flexible sealed accumulator cell but also of an accumulator pack including the flexible sealed accumulator cell, a device equipped with the accumulator pack, and the like.

Patent Literature 1 (PTL 1) discloses a sealed type secondary battery. The sealed type secondary battery of PTL 1 includes a bag-like storage member that stores a power generation element having a positive plate, a separator, and a negative plate. The bag-like storage member is made of a laminate material whose peripheral edge is welded to form a bag-like shape. A welded portion of the peripheral edge of the bag-like storage member has a cutout portion.

In the sealed type secondary battery of PTL 1, a welding strength in the cutout portion is weaker than a welding strength in a portion other than the cutout portion. This causes the cutout portion to open when an internal pressure is raised by a gas generated due to overcharge or overdischarge in the bag-like storage member. As a result, the gas is discharged through an opening produced in the cutout portion. In this manner, the sealed type secondary battery of PTL 1 promptly discharges the gas through a specified portion, for suppressing or reducing the occurrence of a failure with an enhanced pressure release reliability.

### Citation List

### Patent Literature

PTL 1: Japanese Patent Application Laid-Open No. 2002-56835

### Summary of Invention

### Technical Problem

In the sealed type secondary battery of PTL 1, the welding strength in the cutout portion needs to be surely weaker than the welding strength in the portion other than the cutout portion. Otherwise, an opening is produced in the portion other than the cutout portion, and the gas is discharged through the opening. This cannot enhance a pressure release reliability.

The sealed type secondary battery of PTL 1, therefore, needs to be manufactured such that the welding strength in the cutout portion is kept weaker than the welding strength in the portion other than the cutout portion even with a long-term use of the sealed type secondary battery. If a long-term use of the sealed type secondary battery makes the welding strength in the portion other than the cutout portion weaker than the welding strength in the cutout portion, a possibility arises that a gas may be discharged through the portion other than the cutout portion. A gas discharge through the portion other than the cutout portion impairs the pressure release reliability. To avoid such a situation, it is necessary to sufficiently obtain a difference between the welding strength in the cutout portion and the welding strength in the portion other than the cutout portion. In other words, the welding strength in the cutout portion needs to be sufficiently weaker than the welding strength in the portion other than the cutout portion. In a case where the welding strength in the cutout portion is sufficiently weak, however, there is a risk that the cutout portion may be opened before a gas is generated in the bag-like storage member, which may result in leakage.

In a case where the welding strength in the cutout portion is not sufficiently weak, there is a possibility that an opening may be produced in a portion other than the cutout portion. In a case where the welding strength in the cutout portion is too weak, there is a risk that leakage may occur before an internal pressure rises. In the sealed type secondary battery of PTL 1, therefore, it is necessary to accurately control the welding strength in the peripheral edge of the bag-like storage member. In the actual manufacture of the sealed type secondary battery (for example, in a case of mass production of the sealed type secondary battery), however, there is a problem that accurately controlling the welding strength is difficult.

An object of the present teaching is to provide a flexible sealed accumulator cell capable of suppressing or reducing the occurrence of a failure which may otherwise be caused by overcharge or overdischarge, with a configuration that is easy to manufacture and assemble.

### Solution to Problem

A flexible sealed accumulator cell according to the present teaching is used in a state of being stored in a casing so as to allow power supply from or to the outside of the casing. The flexible sealed accumulator cell includes:
a positive electrode and a negative electrode;
a separator disposed between the positive electrode and the negative electrode;
an electrolyte;
a flexible storage member having a flexibility, the flexible storage member including a storage part and a closure part, the storage part storing the positive electrode, the negative electrode, and the separator as well as the electrolyte, the closure part being provided in at least a part of an outer periphery of the storage part for sealing the storage part;
lead-out terminals each having a plate-like shape, the lead-out terminals being extended out from the flexible storage member so as to be partially exposed from the closure part to outside of the flexible storage member, the lead-out terminals being joined to the flexible storage member in the closure part, each of the lead-out terminals being connected to each of the positive electrode and the negative electrode within the storage part, each of the lead-out terminals having, in its portion exposed to outside of the flexible storage member, an external connector portion for electrical connection with a terminal that enables power supply with another flexible sealed accumulator cell stored in the casing or power supply from or to outside of the casing; and
a flexible protective member having a flexibility, the flexible protective member including a flexible inner portion having a flexibility and a flexible flared portion having a flexibility, the flexible inner portion being located between the external connector portion and a portion of the lead-out terminal joined to the closure part with respect to an extending-out direction of the lead-out terminal, the flexible inner portion covering a first surface and a second surface of the lead-out terminal in a width direction of the lead-out terminal, the flexible flared portion flaring from the flexible inner portion at least in a thickness direction of the lead-out terminal.

The present inventor conducted studies in order to obtain a flexible sealed accumulator cell capable of suppressing or reducing the occurrence of a failure which may otherwise be caused by overcharge or overdischarge, with a configuration that is easy to manufacture and assemble, and eventually found out the followings.

A flexible sealed accumulator cell is commonly used in a state of being stored in a casing so as to allow power supply from or to outside of the casing. The flexible sealed accumulator cell stored in the casing is electrically connected to a terminal that enables power supply with another flexible sealed accumulator cell stored in the casing or power supply from or to outside of the casing. A long-term use of the flexible sealed accumulator cell in this condition is likely to weaken a joining strength of a portion where a closure part of a flexible storage member and a lead-out terminal having a plate-like shape are joined to each other. Thus, when an internal pressure of the flexible storage member is raised by overcharge or overdischarge, a gap may be produced with a high likelihood in the portion where the closure part and the lead-out terminal are joined to each other. As a result of the gap produced in the portion where the closure part and the lead-out terminal are joined to each other, contents of the flexible storage member erupt through the gap. Consequently, the contents having a high concentration may contact an external connector portion of the lead-out terminal. The external connector portion of the lead-out terminal is a portion connected to a terminal that enables power supply with another flexible sealed accumulator cell or power supply from or to outside of the casing. The external connector portion is likely to have a relatively high temperature. This involves a risk that a failure may occur when the external connector portion contacts the high-concentration contents. It is necessary to avoid contact between the external connector portion and the high-concentration contents.

The external connector portion is located at a position distant from the portion where the closure part and the lead-out terminal are joined to each other with respect to an extending-out direction of the lead-out terminal. Thus, when the contents of the flexible storage member erupt through the gap produced in the portion where the closure part and the lead-out terminal are joined to each other, the external connector portion may contact the contents of the flexible storage member with a high likelihood. To avoid contact between the external connector portion and the contents erupting from the flexible storage member, it is conceivable that a portion having a weak joining strength is provided in a peripheral edge of the flexible storage member such that a gap can be produced at a specified position that is not included in the portion where the closure part and the lead-out terminal are joined to each other. As mentioned above, however, it is difficult to accurately control the joining strength such that a gap can be surely produced at a specified position.

The present inventor focused the fact that the portion where the closure part and the lead-out terminal are joined to each other, in which a gap may be produced with a high likelihood, and the external connector portion, which should avoid contacting the contents of the flexible storage member, are distant from each other with respect to the extending-out direction of the lead-out terminal, and reached an idea of providing a flexible protective member by utilizing the lead-out terminal.

The flexible sealed accumulator cell according to the present teaching includes the flexible protective member having a flexibility. The flexible protective member includes the flexible inner portion having a flexibility and the flexible flared portion having a flexibility. The flexible inner portion is located between the external connector portion and the portion of the lead-out terminal joined to the closure part with respect to the extending-out direction of the lead-out terminal, and covers the first surface and the second surface of the lead-out terminal in the width direction of the lead-out terminal. The flexible flared portion flares from the flexible inner portion at least in the thickness direction of the lead-out terminal.

The flexible protective member is configured such that: the flexible inner portion covers the first surface and the second surface of the lead-out terminal in the width direction of the lead-out terminal; and the flexible flared portion flares from the flexible inner portion at least in the thickness direction of the lead-out terminal. The external connector portion is not located between the flexible protective member and the portion where the lead-out terminal is joined to the closure part. Accordingly, the flexible protective member can suppress or reduce the occurrence of a situation in which the external connector portion contacts the contents of the storage part erupting through the gap produced in the closure part between the lead-out terminal and the flexible storage member. It especially can suppress or reduce the occurrence of a situation in which the external connector portion directly contacts the contents of the storage part erupting through the gap. In addition, the flexible protective member can, due to its flexibility, suppress or reduce the occurrence of a situation in which the contents of the storage part erupting through the gap are scattered upon contacting the flexible protective member. Contact between the external connector portion and the high-concentration contents can be suppressed or reduced effectively.

The teaching of the present application identifies a position in the flexible storage member where a gap is more likely to be produced, and provides the flexible protective member, in consideration of properties of the flexible sealed accumulator cell that is used in a state of being stored in a casing so as to allow power supply from or to outside of the casing. Since a position to which measures should be taken is identified, reduction in size and weight of the flexible protective member is enabled. In the present teaching, the flexible protective member can be achieved with a simple configuration so that it can be easily mounted to the lead-out terminal.

### Advantageous Effects of Invention

The present teaching can suppress or reduce the occurrence of a failure which may otherwise be caused by overcharge or overdischarge, with a configuration that is easy to manufacture and assemble.

### Brief Description of Drawings

[FIG. 1] A perspective view schematically showing flexible sealed accumulator cells according to a first embodiment.
[FIG. 2] FIG. 2(a) is a top plan view of the flexible sealed accumulator cells shown in FIG. 1, and FIG. 2(b) is a side view thereof.
[FIG. 3] A partial enlarged cross sectional view of the flexible sealed accumulator cells shown in FIG. 1.
[FIG. 4] FIG. 4(a) is a top plan view schematically showing flexible sealed accumulator cells according to a second embodiment, and FIG. 4(b) is a side view thereof.

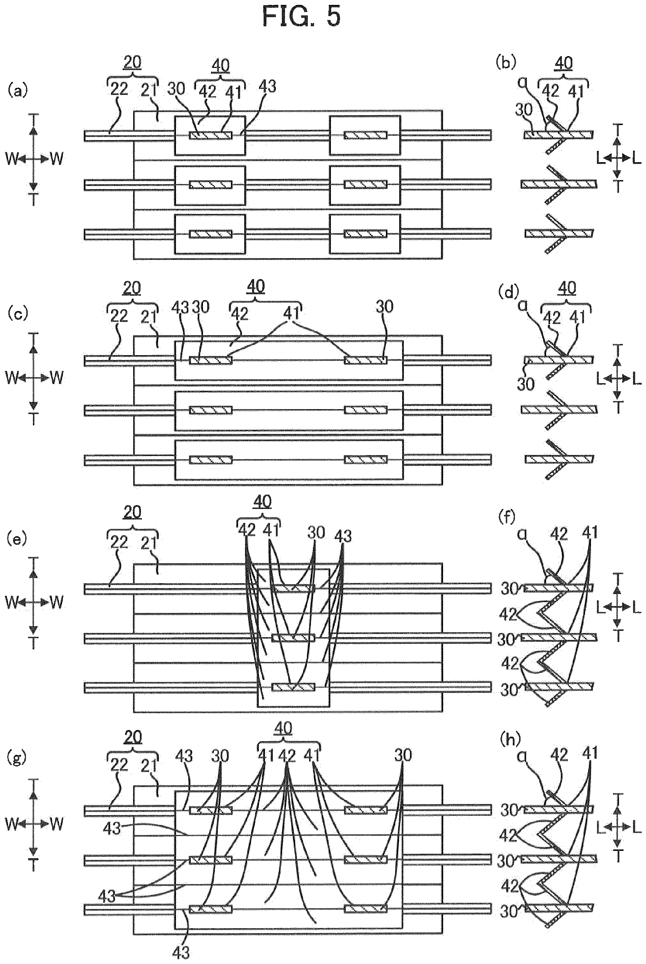

[FIG. 5] FIG. 5(a) is a side view schematically showing flexible sealed accumulator cells according to a third embodiment; FIG. 5(b) is a partial enlarged cross sectional view of flexible protective members and lead-out terminals shown in FIG. 5(a); FIG. 5(c) is a side view schematically showing flexible sealed accumulator cells according to a fourth embodiment; FIG. 5(d) is a partial enlarged cross sectional view of flexible protective members and lead-out terminals shown in FIG. 5(c); FIG. 5(e) is a side view schematically showing flexible sealed accumulator cells according to a fifth embodiment; FIG. 5(f) is a partial enlarged cross sectional view of a flexible protective member and lead-out terminals shown in FIG. 5(e); FIG. 5(g) is a side view schematically showing flexible sealed accumulator cells according to a sixth embodiment; and FIG. 5(h) is a partial enlarged cross sectional view of a flexible protective member and lead-out terminals shown in FIG. 5(g).

### Description of Embodiments

In the following, flexible sealed accumulator cells 10 according to some embodiments of the present teaching will be described with reference to the drawings. In the drawings, L represents an extending-out direction of a lead-out terminal 30. The extending-out direction of the lead-out terminal 30 means a direction parallel to a direction in which the lead-out terminal 30 is extended out. The extending-out direction of the lead-out terminal 30 corresponds to, for example, a longitudinal direction of the flexible sealed accumulator cell 10. T represents a thickness direction of the lead-out terminal 30. The thickness direction of the lead-out terminal 30 corresponds to, for example, a thickness direction of the flexible sealed accumulator cell 10. W represents a width direction of the lead-out terminal 30. The width direction of the lead-out terminal 30 corresponds to, for example, a lateral direction of the flexible sealed accumulator cell 10. Although the description given below deals with a case where the flexible sealed accumulator cell is a laminate type battery cell, the present teaching is not limited to this example. The flexible sealed accumulator cell may be, for example, a laminate type capacitor cell. No particular limitation is put on a battery. Examples of the battery include a lithium-ion battery. No particular limitation is put on a capacitor. Examples of the capacitor include a lithium-ion capacitor.

### <First Embodiment>

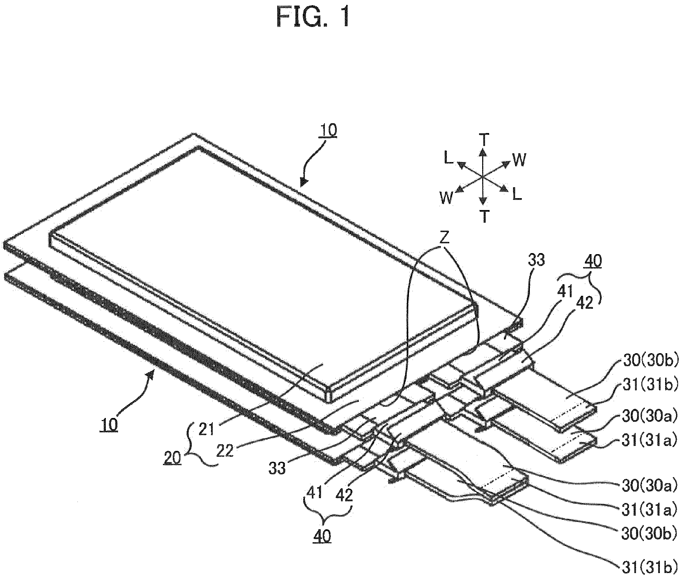

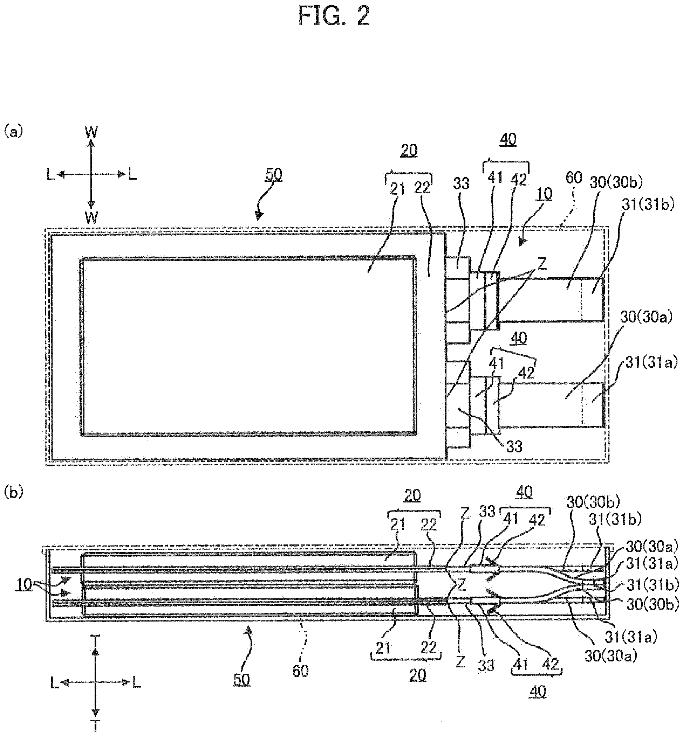

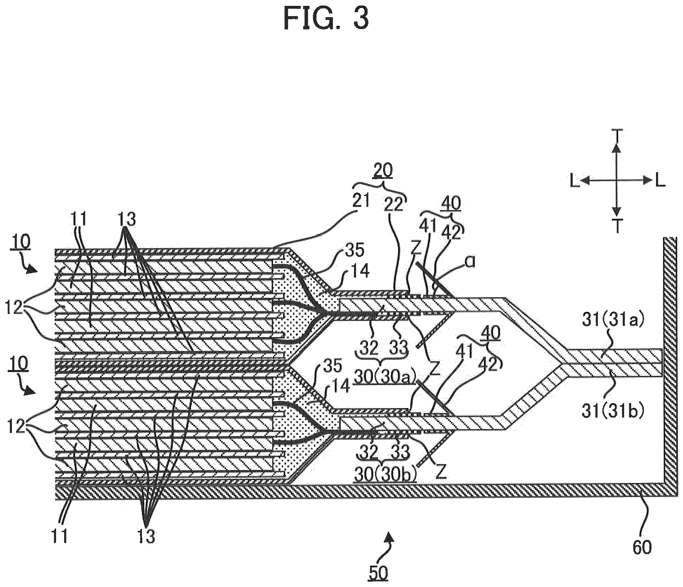

FIG. 1 is a perspective view schematically showing flexible sealed accumulator cells according to a first embodiment. FIG. 2(a) is a top plan view of the flexible sealed accumulator cells shown in FIG. 1, and FIG. 2(b) is a side view thereof. FIG. 3 is a partial enlarged cross sectional view of the flexible sealed accumulator cells shown in FIG. 1.

FIG. 1 to FIG. 3 show two flexible sealed accumulator cells 10 connected in series. The two flexible sealed accumulator cells 10 have identical configurations. The flexible sealed accumulator cell 10 includes a flexible storage member 20, lead-out terminals 30 (a positive electrode lead-out terminal 30a and a negative electrode lead-out terminal 30b), and flexible protective members 40.

The flexible storage member 20, which includes a storage part 21 and a closure part 22, has a flexibility. The flexible storage member 20 is made from a package material having a flexibility. Here, the flexibility means a property of being able to bend or deflect. One example of the package material having a flexibility may be a resin-laminated metal foil. The resin-laminated metal foil is made from a metal foil with a resin film laminated on one or both of its surfaces. A material of the metal foil may be aluminum, an aluminum alloy, titanium, or the like. A material of the resin film may be a thermoplastic resin such as polyethylene or polypropylene, or the like. The number of layers of the resin film and/or the metal foil in the lamination is not limited to one, and may be two or more. As shown in FIG. 3, the storage part 21 stores positive electrodes 11, negative electrodes 12, and separators 13 as well as electrolytes 14. In the storage part 21, a plurality of positive electrodes 11 and a plurality of negative electrodes 12 are alternately arranged in the thickness direction T. The separator 13 is disposed between the positive electrode 11 and the negative electrode 12. The separator 13 is also disposed outermost in the thickness direction T. The closure part 22 is a part provided in at least a part of an outer periphery of the storage part 21, for sealing the storage part 21. In this embodiment, the closure part 22 is formed throughout the outer periphery of the storage part 21. The closure part 22 is constituted of two package materials stacked in the thickness direction T with their peripheral edges welded or joined to each other. Here, for example, the closure part 22 may be constituted of a single package material folded in two with its overlapping peripheral edges welded or joined to each other.

Each of the flexible sealed accumulator cells 10 includes the positive electrode lead-out terminal 30a and the negative electrode lead-out terminal 30b. As shown in FIG. 3, the positive electrode lead-out terminal 30a is electrically connected to the positive electrodes 11 via connecting lines 35 in the storage part 21, and the negative electrode lead-out terminal 30b is electrically connected to the negative electrodes 12 via connecting lines 35 in the storage part 21. The positive electrode lead-out terminal 30a may be directly connected to the positive electrodes 11. The negative electrode lead-out terminal 30b may be directly connected to the negative electrodes 12. In this Description, the lead-out terminal 30 refers to both the positive electrode lead-out terminal 30a and the negative electrode lead-out terminal 30b, unless a distinction is noted.

Each lead-out terminal 30 has a plate-like shape. The width of the lead-out terminal 30 is larger than the thickness of the lead-out terminal 30. The width of the lead-out terminal 30 is the length of the lead-out terminal 30 in the width direction W. The thickness of the lead-out terminal 30 is the length of the lead-out terminal 30 in the thickness direction T. The lead-out terminal 30 includes a metal plate member 32 and a sealant 33, as shown in FIG. 3. The sealant 33 is disposed so as to surround a part of the metal plate member 32 with respect to the extending-out direction L of the lead-out terminal 30, to cover the part in the width direction and the thickness direction of the metal plate member 32. In the thickness direction T of the lead-out terminal 30, the sealant 33 at least partially overlaps the closure part 22 of the flexible storage member 20, and is joined to the closure part 22 by, for example, fusion bonding. As shown in FIG. 3, the lead-out terminal 30 is extended out from the flexible storage member 20 so as to be partially exposed from the closure part 22 to outside of the flexible storage member 20, and is joined to the flexible storage member 20 in the closure part 22. In the present teaching, the lead-out terminal may not necessarily include the sealant. The lead-out terminal may include the metal plate member alone. Although this embodiment illustrates a case where the sealant 33 of the lead-out terminal 30 disposed in the flexible storage member 20 is partially exposed to outside of the flexible storage member 20, the present teaching is not limited to this example. The sealant 33 of the lead-out terminal 30 disposed in the flexible storage member 20 may not be exposed from the flexible storage member 20.

Each lead-out terminal 30 has, in its portion exposed to outside of the flexible storage member 20, an external connector portion 31. In the figure, an external connector portion 31a of the positive electrode lead-out terminal 30a of the upper flexible sealed accumulator cell 10 is connected to an external connector portion 31b of the negative electrode lead-out terminal 30b of the lower flexible sealed accumulator cell 10. An external connector portion 31b of the negative electrode lead-out terminal 30b of the upper flexible sealed accumulator cell 10 is electrically connected to a negative electrode terminal (not shown) which is disposed in a casing 60 (see FIG. 2(a), FIG. 2(b)). An external connector portion 31a of the positive electrode lead-out terminal 30a of the lower flexible sealed accumulator cell 10 is electrically connected to a positive electrode terminal (not shown) which is disposed in the casing 60. Thus, the plurality of (two) flexible sealed accumulator cells 10 disposed in the casing 60, which are connected in series, are stored in the casing 60 so as to allow power supply from or to outside of the casing 60. The accumulator module 50 is configured in this manner.

Each lead-out terminal 30 is provided with the flexible protective member 40. The flexible protective member 40 includes a flexible inner portion 41 and a flexible flared portion 42. The flexible protective member 40 has a flexibility. In this embodiment, the flexible protective member 40 is formed of a flexible sheet-like material. The flexible sheet-like material is made of, for example, a non-conductive resin (insulating resin). Non-limiting examples of the non-conductive resin include thermoplastic resins such as polyethylene and polypropylene. The flexible sheet-like material is thinner than the lead-out terminal 30, as shown in FIG. 3. The flexible protective member 40 is configured to suppress or reduce the occurrence of a situation in which the external connector portion 31 contacts contents of the storage part 21 erupting through a gap produced in the closure part 22 between the lead-out terminal 30 and the flexible storage member 20. In the figure, Z indicates a position where the gap is likely to be produced. The flexible protective member 40 is disposed between the position Z where the gap is likely to be produced and the external connector portion 31 with respect to the extending-out direction L. The flexible protective member 40 is capable of suppressing or reducing the occurrence of a situation in which the external connector portion 31 contacts the contents of the storage part 21 erupting from the flexible storage member 20, with a configuration that is easy to manufacture and assemble. The flexible protective member 40 is a member separate from the sealant 33 of the lead-out terminal 30.

With respect to the extending-out direction L of the lead-out terminal 30, the flexible inner portion 41 is located between the external connector portion 31 and a portion of the lead-out terminal 30 joined to the closure part 22. The flexible inner portion 41 covers a first surface and a second surface of the lead-out terminal 30 in the width direction W of the lead-out terminal 30. The first surface of the lead-out terminal 30 is an upper surface thereof when viewed in the thickness direction T. The second surface of the lead-out terminal 30 is a lower surface thereof when viewed in the thickness direction T. The flexible inner portion 41 has a sleeve-like shape that allows the lead-out terminal 30 to pass therethrough in the extending-out direction L. The flexible inner portion 41 has a flexibility. The flexible inner portion 41 refers to a portion of the flexible protective member 40, the portion being closest to the first surface of the lead-out terminal 30 and closest to the second surface of the lead-out terminal 30 in the thickness direction T of the lead-out terminal 30. The flexible protective member 40 is preferably configured such that at least a part of the flexible inner portion 41 contacts the lead-out terminal 30. Such a configuration can more effectively suppress or reduce the occurrence of a situation in which the external connector portion 31 contacts the contents of the storage part 21 erupting through the gap produced in the closure part 22 between the lead-out terminal 30 and the flexible storage member 20.

The flexible flared portion 42 flares from the flexible inner portion 41 at least in the thickness direction T of the lead-out terminal 30. In this embodiment, the flexible flared portion 42 flares from the flexible inner portion 41 in the thickness direction T and the width direction W of the lead-out terminal 30. The flexible flared portion 42 has a flexibility. The flexible protective member 40 is formed such that an angle α formed between at least the flexible flared portion 42 and the lead-out terminal 30 is an acute angle opening towards the flexible storage member 20 as shown in FIG. 3. The angle α is preferably an acute angle or a right angle. Such a configuration can more effectively suppress or reduce the occurrence of a situation in which the external connector portion 31 contacts the contents of the storage part 21 erupting through the gap produced in the closure part 22 between the lead-out terminal 30 and the flexible storage member 20.

In this embodiment, the flexible protective member 40 is supported on the lead-out terminal 30. The lead-out terminal 30 bears at least a part of the weight of the flexible protective member 40. The flexible protective member 40 is provided to the lead-out terminal 30 such that at least a part of the flexible inner portion 41 is in contact with the lead-out terminal 30. In this configuration, it is preferable that at least a part of the flexible inner portion 41 is in contact with the lead-out terminal 30 in the thickness direction T. In a case where a part of the flexible inner portion 41 is not in contact with the lead-out terminal 30 in the thickness direction T, it is preferable that this part and the lead-out terminal 30 are spaced from each other in the thickness direction T by a distance equal to or shorter than the thickness of the lead-out terminal 30. The flexible protective member 40 may be supported on the lead-out terminal 30 while being fixed to the lead-out terminal 30, or may be supported on the lead-out terminal 30 without being fixed to the lead-out terminal 30. The flexible protective member 40 may be disposed in contact with the flexible storage member 20, or may be disposed in no contact with the flexible storage member 20. The flexible protective member 40 is not fixed to the flexible storage member 20. The flexible protective member 40 is capable of suppressing or reducing the occurrence of a situation in which the external connector portion 31 contacts the contents of the storage part 21 erupting from the flexible storage member 20 even though the flexible protective member 40 is not fixed to the flexible storage member 20. Accordingly, the flexible protective member 40 is capable of suppressing or reducing the occurrence of a situation in which the external connector portion 31 contacts the contents of the storage part 21 erupting from the flexible storage member 20, with a configuration that is easy to manufacture and assemble.

In this embodiment, the flexible protective member 40 is disposed so as not to overlap the storage part 21 when viewed in the thickness direction T of the lead-out terminal 30, as shown in FIG. 2(a). More specifically, the flexible protective member 40 is disposed such that the flexible flared portion 42 does not overlap the storage part 21 when viewed in the thickness direction T of the lead-out terminal 30. With such a configuration easy to manufacture and assemble, this embodiment can suppress or reduce the occurrence of a situation in which the external connector portion 31 contacts the contents of the storage part 21 erupting from the flexible storage member 20.

In this embodiment described above, a pair of lead-out terminals 30 are extended out from a first side of the rectangular flexible sealed accumulator cell 10 when viewed in the thickness direction T, and each of the pair of lead-out terminals 30 included in each of a plurality of flexible sealed accumulator cells 10 is individually provided with the flexible protective member 40. That is, in the first embodiment, every flexible protective member 40 is provided on the first side of the rectangular flexible sealed accumulator cell 10. The present teaching, however, is not limited to this embodiment. For example, the present teaching can adopt the second to sixth embodiments described below.

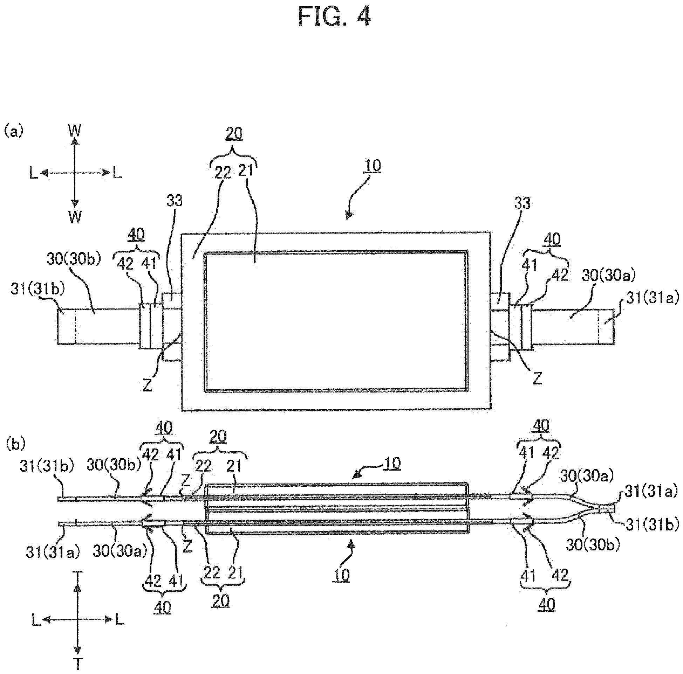

In the following, the second to sixth embodiments will be described with reference to the drawings. In FIG. 4(a) to FIG. 5(h), configurations corresponding to the configurations of the first embodiment are given the same reference signs as those given to the configurations of the first embodiment. The descriptions of the second to sixth embodiments deal mainly with configurations different from the first embodiment, and the configurations identical to those of the first embodiment will not be described.

### <Second Embodiment>

FIG. 4(a) is a top plan view schematically showing flexible sealed accumulator cells 10 according to a second embodiment, and FIG. 4(b) is a side view thereof.

In the second embodiment, a plurality of (two) flexible sealed accumulator cells 10, which are connected in series, are stored in a casing (not shown) so as to allow power supply from or to outside of the casing. In each of the flexible sealed accumulator cells 10, a pair of lead-out terminals 30 are extended out in an extending-out direction L, respectively from opposite sides of the rectangular flexible sealed accumulator cell 10, when viewed in a thickness direction T. In the figure, an external connector portion 31a of a positive electrode lead-out terminal 30a of the upper flexible sealed accumulator cell 10 is connected to an external connector portion 31b of a negative electrode lead-out terminal 30b of the lower flexible sealed accumulator cell 10. An external connector portion 31b of a negative electrode lead-out terminal 30b of the upper flexible sealed accumulator cell 10 is electrically connected to a negative electrode terminal (not shown) which is disposed in the casing. An external connector portion 31a of a positive electrode lead-out terminal 30a of the lower flexible sealed accumulator cell 10 is electrically connected to a positive electrode terminal (not shown) which is disposed in the casing. A flexible protective member 40 is provided to each of the pairs of lead-out terminals 30 included in each of the plurality of flexible sealed accumulator cells 10. In the second embodiment, the flexible protective member 40 is disposed on each side of the rectangular flexible sealed accumulator cell 10. This flexible protective member 40 has a configuration identical to that of the flexible protective member 40 of the first embodiment, and thus a description thereof is omitted.

### <Third Embodiment>

FIG. 5(a) is a side view schematically showing flexible sealed accumulator cells 10 according to a third embodiment when viewed in an extending-out direction L of lead-out terminals 30, and FIG. 5(b) is a partial enlarged cross sectional view of flexible protective members 40 and lead-out terminals 30 shown in FIG. 5(a). Aside from the flexible protective member 40, the flexible sealed accumulator cell 10 of the third embodiment has a configuration identical to that of the flexible sealed accumulator cell 10 of the first embodiment. In the third embodiment, three flexible sealed accumulator cells 10 stacked in a thickness direction T are stored in a casing (not shown). Each of the lead-out terminals 30 is individual provided with the flexible protective member 40. Each of the flexible protective members 40 is formed of a single flexible sheet-like material that is bent along a folding line 43 (see FIG. 5(a)) extending in a width direction W of the lead-out terminal 30, the bending being made such that an angle α (see FIG. 5(b)) between a flexible flared portion 42 and the lead-out terminal 30 is an acute angle. Each of the flexible protective members 40 has one through hole formed along the folding line 43. The through hole has the lead-out terminal 30 inserted therethrough. In the third embodiment, an outer edge of the through hole of the flexible protective member 40 constitutes a flexible inner portion 41 of the flexible protective member 40. The flexible protective member 40 of the third embodiment does not have a sleeve-like flexible inner portion 41. The flexible flared portion 42 flares from the flexible inner portion 41 in the thickness direction T of the lead-out terminal 30.

### <Fourth Embodiment>

FIG. 5(c) is a side view schematically showing flexible sealed accumulator cells 10 according to a fourth embodiment, when viewed in an extending-out direction L of lead-out terminals 30, and FIG. 5(d) is a partial enlarged cross sectional view of flexible protective members 40 and lead-out terminals 30 shown in FIG. 5(c). In the fourth embodiment, unlike in the third embodiment, a pair of lead-out terminals 30 included in the flexible sealed accumulator cell 10 is provided with one flexible protective member 40. Each flexible protective member 40 is formed of a single flexible sheet-like material that is bent along a folding line 43 (see FIG. 5(c)) extending in a width direction W of the lead-out terminal 30, the bending being made such that an angle α (see FIG. 5(d)) between a flexible flared portion 42 and the lead-out terminal 30 is an acute angle. Each flexible protective member 40 has two through holes formed along the folding line 43 at an interval. Each of the through holes has the lead-out terminal 30 inserted therethrough. Outer edges of the two through holes of the flexible protective member 40 respectively constitute two flexible inner portions 41 of the flexible protective member 40. The flexible flared portion 42 flares from each flexible inner portion 41 in a thickness direction T and the width direction W of the lead-out terminal 30.

### <Fifth Embodiment>

FIG. 5(e) is a side view schematically showing flexible sealed accumulator cells 10 according to a fifth embodiment, when viewed in an extending-out direction L of lead-out terminals 30, and FIG. 5(f) is a partial enlarged cross sectional view of a flexible protective member 40 and lead-out terminals 30 shown in FIG. 5(e). Aside from the flexible protective member 40, the flexible sealed accumulator cell 10 of the fifth embodiment has a configuration identical to that of the flexible sealed accumulator cell 10 of the second embodiment. In the fifth embodiment, a plurality of (three) flexible sealed accumulator cells 10 stacked in a thickness direction T are packed in a casing (not shown). As shown in FIG. 5(e), a plurality of (three) lead-out terminals 30 arranged in the thickness direction T are extended out from a first side of the plurality of (three) flexible sealed accumulator cells 10. The plurality of (three) lead-out terminals 30 which are arranged in the thickness direction T and are extended out from the first side of the plurality of (three) flexible sealed accumulator cells 10 are provided with one flexible protective member 40. In addition, a plurality of lead-out terminals 30 arranged in the thickness direction T are extended out from a second side of the plurality of flexible sealed accumulator cells 10, and the plurality of lead-out terminals 30 are provided with a flexible protective member 40, though not shown.

The flexible protective member 40 is formed of a single flexible sheet-like material that is folded into an accordion shape by being alternately bent along a plurality of folding lines 43 extending in a width direction W of the lead-out terminal 30. The number of folding lines 43 is five, which is equal to the sum of the number of lead-out terminals 30 (three) and the number of gaps between the lead-out terminals 30 (two). The flexible protective member 40 has a plurality of (three) through holes formed along the folding lines 43 corresponding respectively to the plurality of (three) lead-out terminals 30. Each of the through holes has the lead-out terminal 30 inserted therethrough. Outer edges of the three through holes of the flexible protective member 40 respectively constitute three flexible inner portions 41 of the flexible protective member 40. A flexible flared portion 42 is configured to flare from each of the flexible inner portions 41 in the thickness direction T of the lead-out terminal 30. Since the flexible protective member 40 of the fifth embodiment has an accordion shape capable of expanding and contracting in the thickness direction T, it is easy to settle the position of the flexible protective member 40 when it is disposed on the plurality of lead-out terminals 30. This makes manufacturing and assembling easier.

### <Sixth Embodiment >

FIG. 5(g) is a side view schematically showing flexible sealed accumulator cells 10 according to a sixth embodiment, when viewed in an extending-out direction L of lead-out terminals 30, and FIG. 5(h) is a partial enlarged cross sectional view of a flexible protective member 40 and lead-out terminals 30 shown in FIG. 5(g). Aside from the flexible protective member 40, the flexible sealed accumulator cell 10 of the sixth embodiment has a configuration identical to that of the flexible sealed accumulator cell 10 of the fourth embodiment. A pair of lead-out terminals 30 arranged side by side at an interval in a width direction W is extended out from each of a plurality of flexible sealed accumulator cells 10 stacked in a thickness direction T. That is, a plurality of pairs (three pairs) of lead-out terminals 30 are extended out from a first side of the plurality of flexible sealed accumulator cells 10 while being arranged in the thickness direction.

The flexible protective member 40 is formed of a single flexible sheet-like material having an accordion shape, similarly to the fifth embodiment (FIG. 5(e) and FIG. 5(f)). The flexible protective member 40 has a plurality of pairs (three pairs) of through holes, each pair of through holes being formed along a folding line 43 corresponding to each of a plurality of pairs (three pairs) of lead-out terminals 30. Each of the through holes has the lead-out terminal 30 inserted therethrough. Outer edges of the six through holes of the flexible protective member 40 constitute six flexible inner portions 41 of the flexible protective member 40. A flexible flared portion 42 is configured to flare from each of the flexible inner portions 41 in the thickness direction T and the width direction W of the lead-out terminal 30.

In the fourth embodiment and the sixth embodiment, the flexible protective member 40 individually has through holes each corresponding to each of a pair of lead-out terminals 30 arranged adjacent at an interval in the width direction W. Since the through hole is provided for each lead-out terminal 30, the occurrence of a situation in which the external connector portion contacts the contents of the storage part erupting from the flexible storage member can be suppressed or reduced more effectively. The present teaching, however, is not limited to this example. In another example, the flexible protective member 40 may have a through hole extending in the width direction W so as to correspond to both of a plurality of lead-out terminals 30 arranged adjacent at an interval in the width direction W. Forming through holes such that one through hole corresponds to a plurality of lead-out terminals 30 can provide a configuration that is easier to manufacture and assemble.

In the third to sixth embodiments, the flexible protective member 40 has a through hole serving as a portion where the lead-out terminal 30 is inserted in the extending-out direction L. The present teaching, however, is not limited to this example. The through hole may be substituted with a slit extending to an outer edge of the flexible protective member 40 on one side with respect to the width direction W.

In the third to sixth embodiments, the flexible protective member 40 is bent along the folding line 43, but it is not always necessary that the flexible protective member 40 is bent. In such a configuration, for example, the angle α is a right angle.

The number of flexible sealed accumulator cells stored in one casing is not particularly limited, and it may be one or more. How to connect a plurality of flexible sealed accumulator cells is not particularly limited. The plurality of flexible sealed accumulator cells may be either connected in series or connected in parallel. A combination of parallel connection and series connection may be acceptable.

In the present teaching, the accumulator module includes a casing and at least one flexible sealed accumulator cell stored in the casing so as to allow power supply from or to outside of the casing, as shown in FIG. 2(a) and FIG. 2(b). An accumulator pack, though not shown, includes at least one accumulator module. The accumulator pack may be provided with a battery controller for monitoring and controlling a state of a flexible sealed accumulator cell included in the accumulator module. The accumulator pack may be provided with a sensor that detects a state (for example, a voltage value, a current value, a temperature, and the like) of the flexible sealed accumulator cell and that is connected to the battery controller such that the sensor can output a detection result to the battery controller. Aside from the flexible protective member, conventionally known configurations can be adopted as configurations of the accumulator module and the accumulator pack. The accumulator module and the accumulator pack according to the present teaching include the above-described flexible protective member, and therefore can suppress or reduce the occurrence of a failure which may otherwise be caused by overcharge or overdischarge, with a configuration that is easy to manufacture and assemble.

It should be understood that the terms and expressions used herein are for descriptions and not to be construed in a limited manner, do not eliminate any equivalents of features shown and mentioned herein, and allow various modifications falling within the claimed scope of the present teaching. The present teaching is not limited to embodiments described in this Description.

### Reference Signs List

10 flexible sealed accumulator cell
11 positive electrode
12 negative electrode
13 separator
14 electrolyte
20 flexible storage member
   21 storage part
   22 closure part
30 lead-out terminal
   30a positive electrode lead-out terminal
   30b negative electrode lead-out terminal
31 external connector portion
   31a (external connector portion of positive electrode lead-out terminal 30a)
   31b (external connector portion of negative electrode lead-out terminal 30b)
32 metal plate member
33 sealant
35 connecting line
40 flexible protective member
   41 flexible inner portion
   42 flexible flared portion
   43 folding line
50 accumulator module
60 casing

## Claims

1. A flexible sealed accumulator cell that is used in a state of being stored in a casing so as to allow power supply from or to outside of the casing, the flexible sealed accumulator cell comprising:
a positive electrode and a negative electrode;
a separator disposed between the positive electrode and the negative electrode;
an electrolyte;
a flexible storage member having a flexibility, the flexible storage member including a storage part and a closure part, the storage part storing the positive electrode, the negative electrode, and the separator as well as the electrolyte, the closure part being provided in at least a part of an outer periphery of the storage part, for sealing the storage part;
lead-out terminals each having a plate-like shape, the lead-out terminals being extended out from the flexible storage member so as to be partially exposed from the closure part to outside of the flexible storage member, the lead-out terminals being joined to the flexible storage member in the closure part, each of the lead-out terminals being connected to each of the positive electrode and the negative electrode within the storage part, each of the lead-out terminals having, in its portion exposed to outside of the flexible storage member, an external connector portion for electrical connection with a terminal that enables power supply with another flexible sealed accumulator cell stored in the casing or power supply from or to outside of the casing; and
a flexible protective member having a flexibility, the flexible protective member including a flexible inner portion having a flexibility and a flexible flared portion having a flexibility, the flexible inner portion being located between the external connector portion and a portion of the lead-out terminal joined to the closure part with respect to an extending-out direction of the lead-out terminal, the flexible inner portion covering a first surface and a second surface of the lead-out terminal in a width direction of the lead-out terminal, the flexible flared portion flaring from the flexible inner portion at least in a thickness direction of the lead-out terminal.

2. The flexible sealed accumulator cell according to claim 1, wherein
the flexible protective member is configured such that at least the flexible flared portion and the lead-out terminal form the right angle or an acute angle opening towards the flexible storage member.

3. The flexible sealed accumulator cell according to claim 1 or 2, wherein
the flexible protective member is disposed such that at least a part of the flexible inner portion is in contact with the lead-out terminal.

4. The flexible sealed accumulator cell according to any one of claims 1 to 3, wherein
the flexible protective member is supported on the lead-out terminal.

5. The flexible sealed accumulator cell according to any one of claims 1 to 4, wherein
the flexible protective member is disposed so as not to overlap the storage part when viewed in the thickness direction of the lead-out terminal.

6. The flexible sealed accumulator cell according to any one of claims 1 to 5, wherein
the flexible protective member is formed of a flexible sheet-like material.

7. The flexible sealed accumulator cell according to claim 6, wherein
the flexible sheet-like material is thinner than the lead-out terminal.

8. The flexible sealed accumulator cell according to any one of claims 1 to 7, wherein
the flexible protective member is configured to suppress or reduce the occurrence of a situation in which the external connector portion contacts a content of the storage part erupting through a gap produced in the closure part between the lead-out terminal and the flexible storage member.

9. An accumulator module comprising the flexible sealed accumulator cell according to any one of claims 1 to 8 and a casing, the number of the flexible sealed accumulator cells being at least one, wherein
the at least one flexible sealed accumulator cell is stored in the casing so as to allow power supply from or to outside of the casing.

10. An accumulator pack comprising the accumulator module according to claim 9, the number of the accumulator modules being at least one.
